# EUROPEAN PATENT SPECIFICATION

(11) **EP 0 777 601 B1**
(45) Date of publication and mention of the grant of the patent: **28.10.1998**
(21) Application number: 95933711.4
(22) Date of filing: 09.08.1995
(51) Int. Cl.: B64C 27/00, G01M 1/12

(54) **METHOD AND APPARATUS FOR BALANCING HELICOPTER ROTOR BLADES**
VERFAHREN UND VORRICHTUNG ZUR AUSGLEICHUNG EINES DREHFLÜGELBLATTES
PROCEDE ET APPAREIL D'EQUILIBRAGE DES PALES D'UN ROTOR D'HELICOPTERE

(30) Priority: 31.08.1994 US 298712
(43) Date of publication of application: 11.06.1997
(73) Proprietor: UNITED TECHNOLOGIES CORPORATION, Stratford, CT 06497-9129 (US)
(72) Inventor: REINFELDER, William, C., Woodbridge, CT 06525 (US); LEAHY, Kevin, P., Naugatuck, CT 06770 (US); JONES, Corey, D., Prospect, CT 06712 (US); KOVALSKY, David, A., Shelton, CT 06484 (US)
(74) Representative: Klunker . Schmitt-Nilson . Hirsch
(86) International application number: PCT/US95/10070
(87) International publication number: WO 96/06775

(56) References cited:
- DE-A- 2 935 002
- FR-A- 2 315 691

## Description

### Technical Field

This invention relates to a method and apparatus for balancing helicopter rotor blades for proper functioning on the helicopter.

### Background Art

Helicopter rotor blades, in order to operate properly in the dynamic environment in which they are used, must be properly balanced so that they will not cause a high vibration level in the helicopter. The rotor blades are typically manufactured with a multi-component assemblage which includes a spar, a leading edge sheath, trailing edge pocket pairing, whose weight or mass can vary from blade to blade in what are intended to be identically balanced blades. The blade assemblage is typically manufactured by bonding the aforementioned components using layers of film adhesive. The use of such multiple components to form the rotor blades results in weight distribution variations from blade to blade. In order for the rotor blades to perform properly, the weight distribution and the resultant moments of the blade must meet predetermined criteria which define target weight distribution and moments along the length or span of the blade from root to tip, and also chordally or edgewise of the blade, from the leading edge to the trailing edge thereof. The desired moments can be defined as blade length weight ratios between the root end of the blade and the tip end of the blade at both the leading and trailing edges; and as blade chordal weight ratios at both the root end and the tip end of the blade. Achieving such predetermined weight distribution criteria will result in a "balanced" rotor blade that will operate properly in its intended environment. Thus, each rotor blade must be individually checked for weight distribution, and must be brought into "balance"; or stated another way, must be made to conform to the desired ideal weight distribution that will produce optimal root-to-tip blade moment and leading edge-to-trailing edge blade moment, and thus proper operation of the rotor blades.

The aforesaid procedure is time consuming as it requires two different balancing apparatus. It would be desirable to be able to balance the blade both spanwise and chordwise at a single balancing apparatus using a single balancing procedure with the same equipment being used to determined both spanwise and chordwise moments in the blade.

### Disclosure of the Invention

One object of the invention is to provide a static balancing assembly for determining actual inboard and outboard chordwise moments of a helicopter rotor blade.

This object of the present invention is provided by a static balancing assembly characterized by a first weighing scale positioned proximate an inboard leading edge corner of the rotor blade, a second weighing scale positioned proximate an inboard trailing edge corner of the rotor blade, a third weighing scale positioned proximate an outboard leading edge corner of the rotor blade, and a fourth weighing scale positioned proximate an outboard trailing edge corner of the rotor blade.

The first and second weighing scales in combination form an inboard chordwise means that provides inboard weight values for determining an actual inboard chordwise moment for the rotor blade. The third and fourth weighing scales in combination form an outboard chordwise means that provides outboard weight values for determining an actual outboard chordwise moment for the rotor blade.

A microprocessor is connected to the inboard and outboard chordwise means and is operative to utilize the inboard and outboard weight values to determine the actual inboard and outboard chordwise moments of the rotor blade.

Another object of the present invention is to provide a static balancing assembly for determining actual inboard and outboard chordwise moments of a helicopter rotor blade.

This object of the present invention is provided by the static balancing assembly described in the preceding paragraphs. The first and third weighing scales form a leading edge means for providing leading edge weight values for determining an anctual leading edge spanwise moment of the rotor blade. The second and fourth weighing scales form a trailing edge means for providing trailing edge weight values for determining an actual trailing edge spanwise moment of the rotor blade.

The microprocessor is connected to the leading and trailing edge means and is operative to utilize the leading and trailing edge weight values to determine the actual leading edge and trailing edge spanwise moments of the rotor blade.

Another object of the present invention is to provide a method for statically balancing helicopter rotor blades both chordwise and spanwise using the static balancing apparatus described hereinabove.

This object of the invention is achieved by a method comprising the steps of determining the actual inboard and outboard chordwise moments of the rotor blade, adding or subtracting inboard and outboard weight chordwise on the rotor blade as required to conform the actual inboard and outboard chordwise moments of the rotor blade to target inboard and outboard chordwise moments of the rotor blade, determing actual leading edge and trailing edge spanwise moments of the blade that result from the conformed target inboard and outboard chordwise moments of the blade, and adding or subtracting inboard and outboard weight spanwise on the rotor blade as required so as to conform the actual leading edge and trailing edge spanwise moments to target leading edge and trailing edge spanwise moments of the blade.

### Brief Description of the Drawings

FIG. 1 is an end elevational view of an embodiment of a static balancing assembly use for performing the invention as viewed chordwise of the rotor blade;
FIG. 2 is a fragmented side elevational view of the static balancing assembly of FIG. 1 as viewed spanwise of the rotor blade;
FIG. 3 is a schematic plan view of the blade showing the location of the weighing scales, and the reference parameters used to calculate the actual blade moment values, and calculate alterations of the blade weight distribution need to arrive at the desired operating moment values; and
FIG. 4 is a schematic system diagram f the various components in the apparatus of FIG. 1.

### Best Mode for Carrying Out The Invention

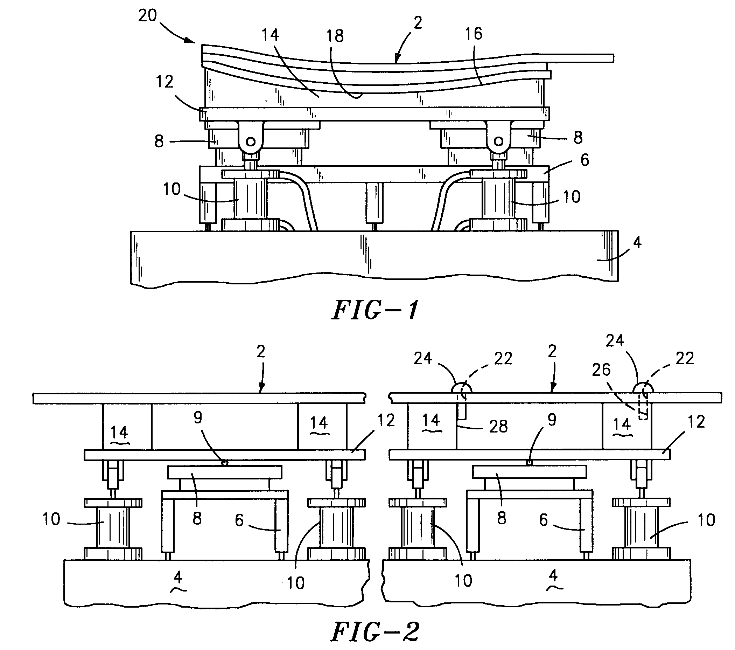

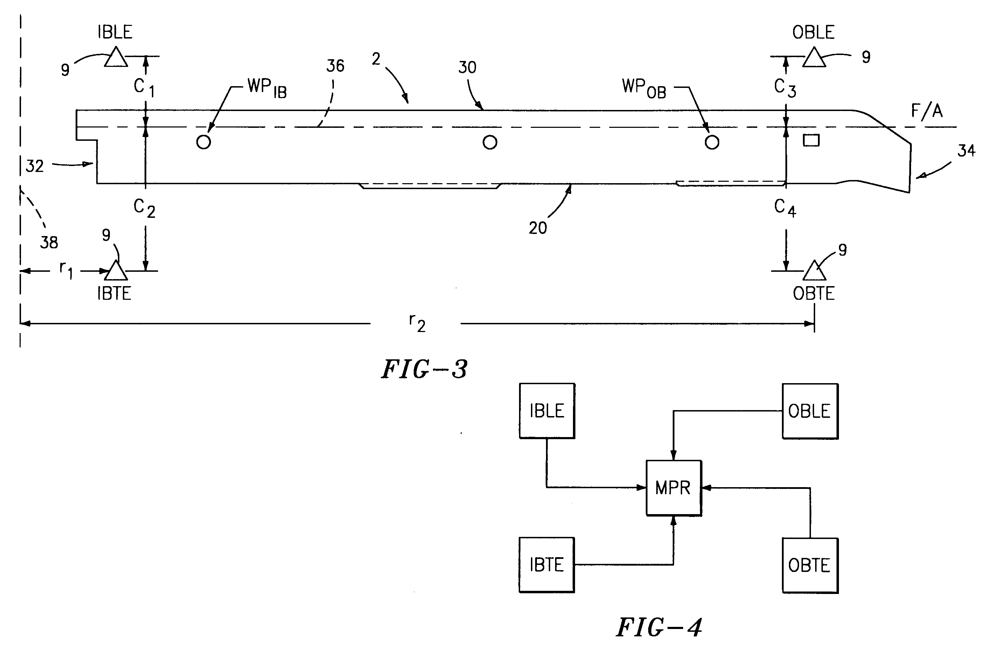

Referring now to the drawings, there is shown in FIGS. 1 and 2 fragmented chordwise and spanwise edge views, respectively, of a static balancing assembly that operates in accordance with this invention to balance helicopter rotor blades, a blade being denoted generally by the numeral 2. The static balancing assembly includes a support bench 4 on which a plurality of tables 6 are disposed. Each table 6 supports a pair of separate point scales 8 that are operably connected with and feed data signals to a microprocessor which is not shown in FIGS. 1, 2. The scales 8 are preferably TOLEDO® Model 1985 scales (TOLEDO is a registered trademark of the Toledo Scale Corporation, Worthington, OH, for measuring apparatus and measurement-display devices) or equivalent high accuracy scales. Each scale 8 is provided with a plate-contact element or scale point 9 as shown in FIG. 2. The scale points 9 preferably have a spherical, hemispherical or the like configuration such that each scale point 9 effectively provides a single point of contact with the object to be weighed.

A plurality of pneumatic jacks 10 are also disposed on the bench 4 and are operably connected to plates 12 that are situated above and overlie the scales 8. The plates 12 may be selectively lowered onto or raised off of the scale points 9 of the scales 8 by operation of the jacks 10.

The static balance assembly also includes a plurality of rotor blade support members 14. The support members 14 are formed from a reinforced and stiffened fiberglass composite, and each support member 14 has a precisely contoured upper surface 16 that conforms to the contour of the surface portion 18 of the blade 2 that is engaged by the respective support member 14. The support members 14 are operative to provide strength and rigidity while prohibiting blade flexure, while at the same time minimizing the assembly weight contribution of the members 14 so as to obtain accurate blade moment readings. The trailing edge 20 of the blade 2 can be provided with locating holes 22 which receive locating pins 24 that are operable to engage the support members 14, either in a matching opening 26 in the support member 14, or by engaging the side surface 28 of a support member 14, as shown in Fig. 2. The locating pins 24 are thus operative to properly position the blade (2) on the static balancing assembly. The locating pins 24 may also function to fasten the blade 2 to the support members 14. This will result in achievement of the desired positioning of the corners of the blade 2 relative to the scales 8. This also serves to pin the blade skin to the remainder of the blade 2 during the balancing process.

Rotor blade chordwise moment readings are obtained by recording the weight (W) displayed on each of the four scales 8, taking into account the distance of the weight-bearing point on each of the scales 8 from the feathering axis of the blade 2, as will be described in greater detail hereinafter. The scales 8 form four pairs of blade-weight data-gathering points from which the need to alter the weight distribution of the rotor blade 2 can be ascertained. The rotor blade 2 has four moment-defining points: the leading edge - tip corner; the trailing edge - tip corner; the leading edge - root corner; and the trailing edge - root corner.

The four scales 8 are operably connected to a TOLEDO® 8146 desk mount display indicator or similar display device and to a microprocessor that is preprogrammed to: (i) analyze gathered weight data; (ii) calculate the actual moments of the rotor blade 2; and (iii) identify the amount of and locations on the blade 2 where additional weight must be added to or subtracted from the blade 2 to achieve proper balance. The information that is preprogrammed into the microprocessor are the weight ratios that are desired between the several paired blade-weight data-gathering points and an algorithm that is operative to modify the blade weight to achieve the desired or target blade weight ratios once the actual weight ratios have been ascertained. It is to be understood that the four corner weight ratios will confirm the four operating moments on the blade 2, both actual and desired (target). Once the actual leading edge and trailing edge spanwise moment values are determined, and the root or "inboard" and the tip or "outboard" actual chordwise moment values are determined, these actual moment values are compared to the desired or target operating moment values to determine the necessary blade-weight distribution adjustments that are necessary to achieve the desired or target spanwise and chordwise operating moments, i.e., to balance the blade 2.

Referring now to Fig. 3, a schematic plan view of the rotor blade 2 is shown, along with the various reference points and dimensions which are used to calculate the chordwise and spanwise moments of the blade 2. The rotor blade 2 has a leading edge 30 and a trailing edge 20. The root or inboard end of the blade 2 is designated by the numeral 32 and the tip or outboard end of the blade 2 is designated by the numeral 34. The feathering axis of the blade 2 is designated by the numeral 36. The scale points of support for the blade 2 are designated by the numeral 9 (see disclosure hereinabove), and the axis of rotation of the rotor is denoted by the reference line 38, which is perpendicular to the feathering axis 36.

It will be noted that one scale point 9, which is designated OBTE (outboard trailing edge), is located a distance C₄ from the feathering axis 36 towards the trailing edge 20, and a distance r₂ outboard of the reference line 38. Another scale point 9, which is designated OBLE (outboard leading edge), is located a distance C₃ from the feathering axis 36 towards the leading edge 30, and the distance r₂ outboard of the reference line 38. The third scale point 9, which is designated IBTE (inboard trailing edge), is located a distance C₂ from the feathering axis 36 towards the trailing edge 20, and a distance r₁ outboard of the reference line 38. The fourth and final scale point 9, which is designated IBLE (inboard leading edge), is located a distance C₁ from the feathering axis 36 towards the leading edge 30, and the distance r₁ from the reference line 38.

From the above, it will be appreciated that there are a pair of leading edge scale points 9_{IBLE}, 9_{OBLE}; a pair of trailing edge scale points 9_{IBTE}, 9_{OBTE}; a pair of inboard scale points 9_{IBLE}, 9_{IBTE}; and a pair of outboard scale points 9_{OBLE}, 9_{OBTE}. Weight (W) readings at these pairs of scale points are used to determine the rotor blade's actual inboard (IBM) and actual outboard (OBM) chordwise moments (with respect to the feathering axis 36) as follows:$\begin{matrix}\begin{matrix}\begin{matrix}{\text{IBM}}_{\text{chordwise}} {\text{= (W}}_{\text{IBLE}} {\text{)(C}}_{\text{1}} {\text{) - (W}}_{\text{IBTE}} {\text{)(C}}_{\text{2}} \text{)}\end{matrix} \\ \begin{matrix}{\text{OBM}}_{\text{chordwise}} {\text{= (W}}_{\text{OBLE}} {\text{)(C}}_{\text{3}} {\text{) - (W}}_{\text{OBTE}} {\text{)(C}}_{\text{4}} \text{)}\end{matrix}\end{matrix}\end{matrix}$

The symbols WP_{IB} and WP_{OB} shown in Fig. 3 are used to schematically designate the general locations of weight distribution-altering elements that are used to modify the actual inboard and outboard chordwise moments IBM_{chordwise}, OBM_{chordwise} to bring them into conformity with the target chordwise moments which are needed to properly balance the blade 2. Once the actual chordwise moments IBM_{chordwise}, OBM_{chordwise} are known, the identity of WP_{IB} and WP_{OB} are determined by solving the following equations:$\begin{matrix}\begin{matrix}\begin{matrix}{\text{IBM}}_{\text{chordwise}} {\text{± WP}}_{\text{IB}} {\text{= MC}}_{\text{IB}}\end{matrix} \\ \begin{matrix}{\text{OBM}}_{\text{chordwise}} {\text{± WP}}_{\text{OB}} {\text{= MC}}_{\text{OB}}\end{matrix}\end{matrix}\end{matrix}$ wherein MC_{IB} is the target inboard chordwise moment and MC_{OB} is the target outboard chordwise moment.

Once WP_{IB} and WP_{OB} are known, the necessary chordwise weight adjustments are made on the blade 2. These chordwise weight adjustments can be mace in several different ways. When the necessary weight adjustments are relatively minor, they can be made by adding an appropriate number of adhesive film sheets to one or both of the weight adjustment locations, WP_{IB} and/or WP_{OB}, on the blade (2) as required. The system microprocessor will determine the necessary weight which must be added or subtracted and the position on the rotor blade 2 where such weight should be added or subtracted. Alternatively, when the weight adjustments are relatively large, the use of weighted inserts placed inside of the blade 2 may be used to properly balance the blade 2.

One the weight of the blade 2 has been adjusted to achieve the target inboard and outboard chordwise moments MC_{IB}, MC_{OB}, the spanwise moment is adjusted to the target spanwise moment by adding or removing weight from inboard and/or outboard areas on the blade 2 along the feathering axis 36 while the blade 2 remains on the static balancing assembly.

Referring now to Fig. 4, a schematic view of the static balancing assembly showing the four point scales 8_{OBTE}, 8_{OBLE}, 8_{IBTE}, 8_{IBLE} and a microprocessor MPR tied into the scales 8_{OBTE}, 8_{OBLE}, 8_{IBTE}, 8_{IBLE}. It will be understood that the microprocessor MPR is fed weight information from the point scales 8_{OBTE}, 8_{OBLE}, 8_{IBTE}, 8_{IBLE}. The contribution of the weight of the support members 14 to the measured moments is a known factor that is nulled out in the microprocessor MPR operating software. After the weight changes have been made to the rotor blade 2 on the static balancing assembly, the point scales 8_{OBTE}, 8_{OBLE}, 8_{IBTE}, 8_{IBLE} are used to confirm that the blade 2 has been properly balanced. When the target chordwise and spanwise moments for the rotor blade 2 are achieved, the blade 2 is removed from the static balancing assembly and a new blade will be mounted thereon, and balanced as described hereinabove.

It will be readily appreciated that the static balancing assembly of the invention can accurately balance a helicopter rotor blade in both the chordwise and spanwise directions such that dynamic whirl stand balancing of the blades may be eliminated.

In addition to using the static balancing assembly and method described hereinabove to statically balance a rotor blade 2, the static balancing assembly and method of the present invention may also be used to balance the individual components comprising the rotor blade 2

Since many changes and variations of the disclosed embodiment of this invention may be made without departing from the inventive concept, it is not intended to limit the invention otherwise that as required by the appended claims.

## Claims

1. A static balancing assembly for determining actual inboard and outboard chordwise moments of a helicopter rotor blade (2) having a feathering axis (36), said static balancing assembly characterized by:
a first weighing scale (8_{IBLE}, 9_{IBLE}) positioned proximate to an inboard leading edge (30) corner of the rotor blade (2);
a second weighing scale (8_{IBTE}, 9_{IBTE}) positioned proximate to an inboard trailing edge (20) corner of the rotor blade (2);
a third weighing scale (8_{OBLE}, 9_{OBLE}) positioned proximate to an outboard leading edge (30) corner of the rotor blade (2);
a fourth weighing scale (8_{OBTE}, 9_{OBTE}) positioned proximate to an outboard trailing edge (20) corner of the rotor blade (2);
said first and second weighing scales (8_{IBLE}, 9_{IBLE}; 8_{IBTE}, 9_{IBTE}) forming an inboard chordwise means for providing inboard weight values (W_{IBLE}, W_{IBTE}) for determining the actual inboard chordwise moment (IBM_{chordwise}) of the rotor blade (2);
said third and fourth weighing scales (8_{OBLE}, 9_{OBLE}; 8_{OBTE}, 9_{OBTE}) forming an outboard chordwise means for providing outboard weight values (W_{OBLE}, W_{OBTE}) for determining an actual outboard chordwise moment (OBM_{chordwise}) of the rotor blade (2); and
a microprocessor (MPR) connected to said inboard and outboard chordwise means (8_{IBLE}, 9_{IBLE}; 8_{IBTE}, 9_{IBTE};; 8_{OBLE}, 9_{OBLE}; 8_{OBTE}, 9_{OBTE}) and operative to utilize said inboard and outboard weight values (W_{IBLE}, W_{IBTE}; W_{OBLE}, W_{OBTE}) to determine the actual inboard and outboard chordwise moments (IBM_{chordwise}; OBM_{chordwise}) of the rotor blade (2).

2. The static balancing assembly of claim 1 characterized in that
said first weighing scale (8_{IBLE}, 9_{IBLE}) is offset a distance C1 from the feathering axis (36) towards the leading edge (30) side of the rotor blade (2);
said second weighing scale (8_{IBTE}, 9_{IBTE}) is offset a distance C2 from the feathering axis (36) towards the trailing edge (20) side of the rotor blade (2);
said third weighing scale (8_{OBLE}, 9_{OBLE}) is offset a distance C3 from the feathering axis (36) towards the leading edge (30) side of the rotor blade (2); and
said fourth weighing scale (8_{OBTE}, 9_{OBTE}) is offset a distance C4 from the feathering axis (36) towards the trailing edge (20) side of the rotor blade (2);
and wherein said microprocessor (MPR) is programmed to determine the actual inboard and outboard chordwise moments (IBM_{chordwise}; OBM_{chordwise}) by solving the equations:$\begin{matrix}\begin{matrix}\begin{matrix}{\text{IBM}}_{\text{chordwise}} {\text{= W}}_{\text{IBLE}} {\text{x C1 - W}}_{\text{IBTE}} \text{x C2}\end{matrix} \\ \begin{matrix}{\text{OBM}}_{\text{chordwise}} {\text{= W}}_{\text{OBLE}} {\text{x C2 - W}}_{\text{OBTE}} \text{C4}\end{matrix}\end{matrix}\end{matrix}$ wherein
W_{IBLE} is the weight registered by said first weighing scale (8_{IBLE}, 9_{IBLE});
W_{IBTE} is the weight registered by said second weighing scale (8_{IBTE}, 9_{IBTE});
W_{OBLE} is the weight registered by said third weighing scale (8_{OBLE}, 9_{OBLE}); and
W_{OBTE} is the weight registered by said fourth weighing scale (8_{OBTE}, 9_{OBTE}).

3. The static balancing assembly of claim 1 or 2 characterized in that said microprocessor (MPR) is programmed to calculate rotor blade (2) inboard and outboard weight corrections (WP_{IB}, WP_{OB}) needed to arrive at a target inboard chordwise moment (MC_{IB}) and a target outboard chordwise moment (MC_{OB}) for the rotor blade (2), and wherein said inboard and outboard target chordwise moments (MC_{IB}, MC_{OB}) are designed to achieve chordwise aerodynamic balance for the rotor blade (2).

4. The static balancing assembly of claim 3 characterized in that said microprocessor (MPR) is programmed to calculate said inboard and outboard weight corrections (WP_{IB}, WP_{OB}) by solving the equations:$\begin{matrix}\begin{matrix}\begin{matrix}{\text{WP}}_{\text{IB}} {\text{= W}}_{\text{IBLE}} {\text{x C1 - W}}_{\text{IBTE}} {\text{x C2 ± MC}}_{\text{IB}}\end{matrix} \\ \begin{matrix}{\text{WP}}_{\text{OB}} {\text{= W}}_{\text{OBLE}} {\text{x C3 -W}}_{\text{OBTE}} {\text{x C4 ± MC}}_{\text{OB}}\end{matrix}\end{matrix}\end{matrix}$ wherein
MC_{IB} is said target inboard chordwise moment;
WP_{IB} is said inboard weight correction needed to achieve MC_{IB};
MC_{OB} is said target outboard chordwise moment; and
WP_{OB} is said outboard weight correction needed to achieve MC_{OB}.

5. The static balancing assembly of any of claims 1 to 4 characterized in that
said first and third weighing scales (8_{IBLE}, 9_{IBLE}; 8_{OBLE}, 9_{OBLE}) form a leading edge means for providing said leading edge weight values (W_{IBLE}, W_{OBLE}) for determining an actual leading edge spanwise moment of the rotor blade (2);
said second and fourth weighing scales (8_{IBTE}, 9_{IBTE}; 8_{OBTE}, 9_{OBTE}) form a trailing edge means for providing said trailing edge weight values (W_{IBTE}, W_{OBTE}) for determining an actual trailing edge spanwise moment of the rotor blade (2); and
said microprocessor (MPR) is connected to said leading and trailing edge means (8_{IBLE}, 9_{IBLE}; 8_{OBLE}, 9_{OBLE};; 8_{IBTE}, 9_{IBTE}; 8_{OBTE}, 9_{OBTE}) and operative to utilize said leading and trailing edge weight values (W_{IBLE}, W_{OBLE}; W_{IBTE}; W_{OBTE}) to determine said actual leading edge and trailing edge spanwise rotor blade moments.

6. The static balancing assembly of claim 5 characterized in that
said first and second weighing scales (8_{IBLE}, 9_{IBLE}; 8_{IBTE}, 9_{IBTE}) are spaced apart from a reference line (38) denoting the axis of rotation of the rotor blade (2) by a distance r₁;
said third and fourth weighing scales (8_{OBLE}, 9_{OBLE}; 8_{OBTE}, 9_{OBTE}) are spaced apart from said reference line (38) by a distance r₂; and wherein
said microprocessor (MPR) determines said actual leading edge and trailing edge spanwise rotor blade moments by solving the equation:${\text{M}}_{\text{spanwise}} {\text{= (W}}_{\text{IBLE}} {\text{+ W}}_{\text{IBTE}} {\text{± WP}}_{\text{IB}} {\text{) x r}}_{\text{1}} {\text{+ (W}}_{\text{OBLE}} {\text{+ W}}_{\text{OBTE}} {\text{± WP}}_{\text{OB}} {\text{) x r}}_{\text{2}}$ wherein
M_{spanwise} is the actual spanwise moment of the rotor blade (2).

7. The static balance assembly of claim 5 or 6 characterized in that said microprocessor (MPR) is programmed to calculate inboard and outboard spanwise weight corrections for the rotor blade (2) needed to arrive at a target spanwise moment for the rotor blade (2), said target spanwise moment being designed to achieve spanwise aerodynamic balance for the rotor blade (2).

8. The static balance, assembly of claim 7 characterized in that said microprocessor (MPR) is programmed to calculate said spanwise weight corrections by solving the equation:${\text{M}}_{\text{spanwise(reqd)}} {\text{= M}}_{\text{spanwise}} {\text{± W}}_{\text{36}} {\text{x r}}_{\text{s}}$ where
M_{spanwise(reqd)} is the required final spanwise moment of the blade (2),
W₃₆ is the weight to be added or removed at the feathering axis (36), and
rₛ is the spanwise distance of W₃₆ from said reference line (38).

9. The static balance assembly of any of claims 1-8 characterized by
inboard support members (14) for supporting an inboard portion of the rotor blade (2) on said first and second weighing scales scales (8_{IBLE}, 9_{IBLE}; 8_{IBTE}, 9_{IBTE}); and
outboard support members (14) for supporting an outboard portion of the rotor blade (2) on said third and fourth weighing scales (8_{OBLE}, 9_{OBLE}; 8_{OBTE}, 9_{OBTE});
said inboard and outboard support members (14) having contoured upper surfaces (16) conforming to the respective supported surfaces (18) of the rotor blade (2).

10. The static balance assembly of claim 9 characterized by locating pins (24) for temporarily fastening the rotor blade (2) in aligned combination with said inboard and outboard support members (14).

11. The static balance assembly of claim 9 or 10 characterized by lifting means (10) for holding said inboard and outboard support members (14), said lifting means (10) being operative to selectively lowering and lifting said respective inboard and outboard support members (14) with respect to said corresponding weighing scales (8_{IBLE}, 9_{IBLE}; 8_{IBTE}, 9_{IBTE};; 8_{OBLE}, 9_{OBLE}; 8_{OBTE}, 9_{OBTE}).

12. A method for statically adjusting the weight distribution of a helicopter rotor blade (2) so as to provide operational chordwise and spanwise balancing of the rotor blade (2), comprising the steps of:
determining actual inboard and outboard chordwise moments (IBM_{chordwise}, OBM_{chordwise}) for the rotor blade (2);
adding or subtracting inboard and outboard weight chordwise on the rotor blade (2) as required to conform said actual inboard and outboard chordwise moments (IBM_{chordwise}, OBM_{chordwise}) of the blade (2) to target inboard and outboard chordwise moments (MC_{IB}, MC_{OB}) of the blade (2);
determining actual leading edge and trailing edge spanwise blade moments which result from the conformed target chordwise blade moments (MC_{IB}, MC_{OB}) of the blade (2); and
adding or subtracting inboard and outboard weight spanwise on the rotor blade (2) as required so as to conform the actual spanwise blade moments to target leading and trailing edge spanwise moments.

13. A static balancing assembly for statically determining actual inboard and outboard chordwise moments of a helicopter rotor blade component, said static balancing assembly characterized by:
a first weighing scale (8_{IBLE}, 9_{IBLE}) positioned proximate to an inboard leading edge corner of the component;
a second weighing scale (8_{IBTE}, 9_{IBTE}) positioned proximate to an inboard trailing edge corner of the component;
a third weighing scale (8_{OBLE}, 9_{OBLE}) positioned proximate to an outboard leading edge corner of the component;
a fourth weighing scale (8_{OBTE}, 9_{OBTE}) positioned proximate to an outboard trailing edge corner of the component;
said first and second weighing scales (8_{IBLE}, 9_{IBLE}; 8_{IBTE}, 9_{IBTE}) forming an inboard chordwise means for providing inboard weight values for determining an actual inboard chordwise moment for the component;
said third and fourth weighing scales (8_{IBLE}, 9_{OBLE}; 8_{OBTE}, 9_{OBTE}) forming an outboard chordwise means for providing outboard weight values for determining an actual chordwiseoutboard moment of the component; and
a microprocessor (MPR) connected to said inboard and outboard chordwise means (8_{IBLE}, 9_{IBLE}; 8_{IBTE}, 9_{IBTE;} 8_{OBLE}, 9_{OBLE}; 8_{OBTE}, 9_{OBTE}) and operative to utilize said inboard and outboard weight values to determine said actual inboard and outboard chordwise moments of the component.

14. A method for statically adjusting the weight distribution of a helicopter rotor blade component so as to provide operational chordwise and spanwise balancing of the component, characterized by the steps of:
determining actual inboard and outboard chordwise moments for the component;
adding or subtracting inboard and outboard weight chordwise on the component as required to conform said actual inboard and outboard chordwise moments of the component to target inboard and outboard chordwise moments of the component;
determining actual leading edge and trailing edge spanwise moments of the component which result from the conformed target chordwise moments of the component; and
adding or subtracting inboard and outboard weight spanwise on the component as required so as to conform the actual spanwise moments of the component to target leading and trailing edge spanwise moments of the component.

## Patentansprüche

1. Anordnung für statische Balance zum Bestimmen der derzeitigen profilsehnenmäßigen Innen- und Außen-Momente eines Hubschrauber-Rotorblatts (2), welches eine Achse (36) für die Blattsteigungsverstellung aufweist, gekennzeichnet durch:
einen ersten Wägeaufnehmer (8_{IVK}, 9_{IVK}) in der Nähe der Ecke einer Innen-Vorderkante (3) des Rotorblatts (2);
einen zweiten Wägeaufnehmer (8_{IHK}, 9_{IHK}) in der Nähe einer Ecke einer Innen-Hinterkante (20) des Rotorblatts (2);
einen dritten Wägeaufnehmer (8_{AVK}, 9_{AVK}) in der Nähe einer Ecke einer Außen-Vorderkante (30) des Rotorblatts (2);
einen vierten Wägeaufnehmer (8_{AHK}, 9_{AHK}) in der Nähe einer Ecke einer Außen-Hinterkante (30) des Rotorblatts (2); von denen der die erste und der zweite Wägeaufnehmer (8_{IVK}, 9_{IVK}; 8_{IHK}, 9_{IHK}) eine Innen-Profilsehneneinrichtung bilden, um Innen-Gewichtswerte (W_{IVK}, W_{IHK}) zu liefern, um das derzeitige profilsehnenmäßige Innen-Moment (IM_{längs}) des Rotorblatts (2) zu bestimmen;
wobei der dritte und der vierte Wägeaufnehmer (8_{AVK}, 9_{AVK}; 8_{AHK}, 9_{AHK}) eine Außen-Profilsehneneinrichtung bilden, um Außen-Gewichtswerte (W_{AVK}, W_{AHK}) zum Bestimmen eines derzeitigen profilsebnenmäßigen Außen-Moments (AM_{längs})des Rotorblatts (2) zu liefern; und
einen Mikroprozessor (MPR), der an die Innen- und die Außen-Profilsehneneinrichtung (8_{IVK}, 9_{IVK}; 8_{IHK}, 9_{IHK}; 8_{AVK}, 9_{AVK}; 8_{AHK}, 9_{AHK}) angeschlossen ist und betreibbar ist, um die Innen- und die Außen-Gewichtswerte (W_{IVK}, W_{IHK}; W_{AVK}, W_{AHK}) dazu zu verwenden, die derzeitigen profilsehnermäßigen Innen- und Außen-Momente (IM_{längs}; AM_{längs}) des Rotorblatts (2) zu bestimmen.

2. Anordnung nach Anspruch 1, dadurch gekennzeichnet, daß
der erste Wägeaufnehmer (8_{IVK}, 9_{IVK}) gegenüber der Achse für die Blattsteigungsverstellung (36) zur Vorderkante (30) des Rotorblatts (2) hin um einen Abstand C1 versetzt ist;
der zweite Wägeaufnehmer (8_{IHK}, 9_{IHK}) von der Achse für die Blattsteigungsverstellung (36) in Richtung der Hinterkante (20) des Rotorblatts (2) um einen Abstand C2 versetzt ist;
der dritte Wägeaufnehmer (8_{AVK}, 9_{AVK}) gegenüber der Achse (36) für die Blattsteigungsverstellung in Richtung der Vorderkante (30) des Rotorblatts (2) um einen Abstand C3 versetzt ist; und
der vierte Wägeaufnehmer (8_{AHK}, 9_{AHK}) gegenüber der Achse (36) für die Blattsteigungsverstellung in Richtung der Vorderkante (20) des Rotorblatts (2) um einen Abstand C4 versetzt ist;
und der Mikroprozessor (MPR) dazu programmiert ist, die derzeitigen profilsehnenmäßigen Innen- und Außen-Momente (IM_{längs}; AM_{längs}) durch Lösung folgender Gleichungen zu bestimmen:$\begin{matrix}\begin{matrix}\begin{matrix}{\text{IM}}_{\text{längs}} {\text{= W}}_{\text{IVK}} {\text{x C1 - W}}_{\text{IHK}} \text{x C2}\end{matrix} \\ \begin{matrix}{\text{AM}}_{\text{längs}} {\text{= W}}_{\text{AVK}} {\text{x C2 - W}}_{\text{AHK}} \text{C4}\end{matrix}\end{matrix}\end{matrix}$ wobei
W_{IVK} das von dem ersten Wägeaufnehmer (8_{IVK}, 9_{IVK}) registrierte Gewicht ist;
W_{IHK} das von dem zweiten Wägeaufnehmer (8_{IHK}, 9_{IHK}) registrierte Gewicht ist;
W_{AVK} das von dem dritten Wägeaufnehmer (8_{AVK}, 9_{AVK}) registrierte Gewicht ist; und
W_{AHK} das von dem vierten Wägeaufnehmer (8_{AHK}, 9_{AHK}) registrierte Gewicht ist.

3. Anordnung nach Anspruch 1 oder 2, dadurch gekennzeichnet, daß der Mikroprozessor (MPR) dazu programmiert ist, Innen- und Außen-Gewichtskorrekturen (WP_{I}, WP_{A}) für das Rotorblatt (2) zu berechnen, die benötigt werden, um zu einem profilsehnenmäßigen Ziel-Innen-Mmoment (MC_{I}) und einem profilsehnenmäßigen Ziel-Außen-Moment (MC_{A}) für das Rotorblatt (2) zu gelangen, wobei das profilsehnenmäßige Ziel-Innen-Moment und das profilsehnenmäßige Ziel-Außen-Moment (MC_{I}, MC_{A}) derart ausgelegt sind, daß für das Rotorblatt (2) ein profilsehnenmäßiges aerodynamisches Gleichgewicht erreicht wird.

4. Anordnung nach Anspruch 3, dadurch gekennzeichnet, daß der Mikroprozessor (MPR) derart programmiert ist, daß er Innen- und Außen-Gewichtskorrekturen (WP_{I}, WP_{A}) berechnet, indem folgende Gleichungen gelöst werden:$\begin{matrix}\begin{matrix}\begin{matrix}{\text{WP}}_{\text{I}} {\text{= W}}_{\text{IVK}} {\text{x C1 - W}}_{\text{IHK}} {\text{x C2 ± MC}}_{\text{I}}\end{matrix} \\ \begin{matrix}{\text{WP}}_{\text{A}} {\text{= W}}_{\text{AVK}} {\text{x C3 - W}}_{\text{AHK}} {\text{x C4 ± MC}}_{\text{A}}\end{matrix}\end{matrix}\end{matrix}$ wobei
MC_{I} das profilsehnenmäßige Ziel-Innen-Moment ist;
WP_{I} die Innen-Gewichtskorrektur zur Erzielung von MC_{I} ist;
MC_{A} das profilselmenmäßige Ziel-Außen-Moment ist; und
WP_{A} die Außen-Gewichtskorrektur ist, die zum Erzielen von
MC_{A} erforderlich ist.

5. Anordnung nach einem der Ansprüche 1 bis 4, dadurch gekennzeichnet, daß
der erste und der zweite Wägeaufnehmer (8_{IVK}, 9_{IVK}; 8_{AVK}, 9_{AVK}) eine Vorderkanteneinrichtung bildet, um die Vorderkanten-Gewichtswerte (W_{IVK}, W_{AVK}) zum Bestimmen eines derzeitigen spannweitenmäßigen Vorderkanten-Moments des Rotorblatts (2) bereitzustellen;
der zweite und der vierte Wägeaufnehmer (8_{IHK}, 9_{IHK}; 8_{AHK}, 9_{AHK}) eine Hinterkanteneinrichtung bilden, um die Hinterkanten-Gewichtswerte (W_{IHK}, W_{AHK}) zum Bestimmen eines derzeitigen spannweitenmäßigen Hinterkanten-Moments des Rotorblatts (2) bereitzustellen; und
der Mikroprozessor (MPR) an die Vorder- und die Hinterkanteneinrichtung (8_{IVK}, 9_{IVK}; 8_{AVK}, 9_{AVK}; 8_{IHK}, 9_{IHK}; 8_{AHK}, 9_{AHK}) angeschlossen ist und so betreibbar isdt, daß die Vorder- und die Hinterkanten-Gewichtswerte (W_{IVK}, W_{AVK}; W_{IHK}; W_{AHK}) dazu benutzt werden, die derzeitigen spannweitenmäßigen Vorderkanten- und Hinterkanten-Momente für das Rotorblatt zu bestimmen.

6. Anordnung nach Anspruch 5, dadurch gekennzeichnet, daß der erste und der zweite Wägeaufnehmer (8_{IVK}, 9_{IVK}; 8_{IHK}, 9_{IHK}) von einer Referenzlinie (38), welche der Drehachse des Rotorblatts entspricht, um einen Abstand r₁ entfernt sind;
der dritte und der vierte Wägeaufnehmer (8_{AVK}, 9_{AVK}; 8_{AHK}, 9_{AVK}) von der Referenzlinie (38) um einen Abstand r2 entfernt sind, und wobei
der Mikroprozessor (MPR) die derzeitigen spannweitenmäßigen Vorderkanten- und Hinterkanten-Momente des Rotorblatts bestimmt durch Losung der Gleichung:${\text{M}}_{\text{quer}} {\text{=(W}}_{\text{IVK}} {\text{+ W}}_{\text{IHK}} {\text{± WP}}_{\text{I}} {\text{) x r1 + (W}}_{\text{AVK}} {\text{+ W}}_{\text{AHK}} {\text{± WP}}_{\text{A}} \text{)xr2}$ wobei
M_{quer} das derzeitige spannweitenmäßige Moment des Rotorblatts (2) ist.

7. Anordnung nach Anspruch 5 oder 6, dadurch gekennzeichnet, daß der Mikroprozessor (MPR) derart programmiert ist, daß er spannweitenmäßige Innen- und Außen-Gewichtskorrekturen für das Rotorblatt (2) berechnet, die benötigt werden, um zu einem spannweitenmäßigen Ziel-Moment für das Rotorblatt (2) zu gelangen, wobei dieses derart ausgelegt ist, daß für das Rotorblatt (2) ein spannweitenmäßiges aerodynamisches Gleichgewicht erreicht wird.

8. Anordnung nach Anspruch 7, dadurch gekennzeichnet, daß der Mikroprozessor (MPR) programmiert ist, um spannweitenmäßige Gewichtskorrekturen durch Lösen folgender Gleichung zu berechnen:${\text{M}}_{\text{quer(Soll)}} {\text{= M}}_{\text{quer}} {\text{± W}}_{\text{36}} {\text{x r}}_{\text{s}}$ wobei
M_{quer(Soll)} das geforderte endgültige spannweitenmäßige Moment des Blatts (2) ist,
W₃₆ an der Achse für die Blattsteigungsverstellung (36) hinzuzufügende oder wegzunehmende Gewicht ist, und
rₛ der Abstand von W₃₆ von der Refererzlinie (38) in Spannweitenrichtung ist.

9. Anordnung nach einem der Ansprüche 1 bis 8, gekennzeichnet durch
innere Tragglieder (14) zum Abstützen eines inneren Abschnitts des Rotorblatts (2) auf dem ersten und dem zweiten Wägeaufnehmer (8_{IVK}, 9_{IVK}; 8_{IHK}, 9_{IHK}); und
äußere Tragglieder (14) zum Abstützen eines äußeren Abschnitts des Rotorblatts (2) auf dem dritten und dem vierten Wägeaufnehmer (8_{AVK}, 9_{AVK}; 8_{AHK}, 9_{AHK});
wobei die inneren und äußeren Tragglieder (14) konturierte Oberseiten (16) konform zu den jeweils abgestützten Flächen (18) des Rotorblatts (2) aufweisen.

10. Anordnung nach Anspruch 9, gekennzeichnet durch Positionierstifte (24) zum vorübergehenden Festlegen des Rotorblatts (2) in Ausrichtung mit den inneren und äußeren Traggliedern (14).

11. Anordnung nach Anspruch 9 oder 10, gekennzeichnet durch eine Hubvorrichtung (10) zum Halten der inneren und äußeren Tragglieder (14), wobei die Hubvorrichtung (10) betreibbar ist, um die betreffenden inneren und äußeren Tragglieder (14) in Bezug auf die entsprechenden Wägeaufnehmer (8_{IVK}, 9_{IVK}; 8_{IHK}, 9_{IHK}; 8_{AVK}, 9_{AVK}; 8_{AHK}, 9_{AHK}) selektiv abzusenken und anzuheben.

12. Verfahren zum statischen Einstellen der Gewichtsverteilung eines Hubschrauber-Rotorblatts (2) zur Schaffung eines profilsehnenmäßigen und spannweitenmäßigen Gleichgewichts des Rotorblatts (2) beim Betrieb, umfassend die Schritte:
Bestimmen des derzeitigen profilsehnenmäßigen Innen- und Außen-Moments (IM_{längs}, AM_{längs}) für das Rotorblatt (2);
Hinzufügen oder Wegnehmen von Innen- und Außengewicht profilsehnenmäßig an dem Rotorblatt (2), wie es erforderlich ist, um die das derzeitige profilsehnenmäßige Innen- und Außen-Moment (IM_{längs}, AM_{längs}) des Blatts (2) in Übereinstimmung zu bringen mit dem profilsehnenmäßigen Ziel-Innen- und Ziel-Außen-Moment (MC_{I}, MC_{A}) des Blatts (2);
Bestimmen des derzeitigen spannweitenmäßigen Vorderkanten- und Hinterkanten-Moments des Blatts, die sich aus den eingestellten profilsehnenmäßigen Ziel-Blattmomenten des Blatts (MC_{I}, MC_{A}) ergeben; und
Hinzufügen oder Wegnehmen von Innen- oder Außengewicht spannweitenmäßig an dem Rotorblatt (2), wie es erforderlich ist, um die derzeitigen spannweitenmäßigen Blattmomente in Übereinstimmung zu bringen mit spannweitenmäßigen Ziel-Vorderkanten- und Ziel-Hinterkanten-Momenten.

13. Anordnung für statische Balance zum statischen Bestimmen von derzeitigen profilsehnenmäßigen Innen- und Außen-Momenten einer Hubschrauber-Rotorblattkomponente, gekennzeichnet durch:
einen ersten Wägeaufnehmer (8_{IVK}, 9_{IVK}) in der Nähe der Ecke einer Innen-Vorderkante (3) der Komponente;
einen zweiten Wägeaufnehmer (8_{IHK}, 9_{IHK}) in der Nähe einer Ecke einer Innen-Hinterkante (20) der Komponente;
einen dritten Wägeaufnehmer (8_{AVK}, 9_{AVK}) in der Nähe einer Ecke einer Außen-Vorderkante (30) der Komponente;
einen vierten Wägeaufnehmer (8_{AHK}, 9_{AHK}) in der Nähe einer Ecke einer Außen-Hinterkante (30) der Komponente; von denen der erste und der zweite Wägeaufnehmer (8_{IVK}, 9_{IVK}; 8_{IHK}, 9_{IHK}) eine Innen-Profilsehneneinrichtung bilden, um Innen-Gewichtswerte zu liefern, um das derzeitige profilsehnenmäßige Innen-Moment der Komponente zu bestimmen;
wobei der dritte und der vierte Wägeaufnehmer (8_{AVK}, 9_{AVK}; 8_{AHK}, 9_{AHK}) eine Außen-Profilsehneneinrichtung bilden, um Außen-Gewichtswerte zum Bestimmen eines derzeitigen profilsehnenmäßigen Außen-Moments der Komponente zu liefern; und
einen Mikroprozessor (MPR), der an die Innen- und die Außen-Profilsehneneinrichtung (8_{IVK}, 9_{IVK}; 8_{IHK}, 9_{IHK}; 8_{AVK}, 9_{AVK}; 8_{AHK}, 9_{AHK}) angeschlossen ist und betreibbar ist, um die Innen- und die Außen-Gewichtswerte dazu zu verwenden, die derzeitigen profilsehnenmäßigen Innen- und Außen-Momente der Komponente zu bestimmen.

14. Verfahren zum statischen Einstellen der Gewichtsverteilung einer Hubschrauber-Rotorblattkomponente zur Schaffung eines profilsehnenmäßigen und spannweitenmäßigen Gleichgewichts der Komponente beim Betrieb, gekennzeichnet durch folgende Schritte:
Bestimmen des derzeitigen profilsehnenmäßigen Innen- und Außen-Moments für die Komponente;
Hinzufügen oder Wegnehmen von Innen- und Außengewicht profilsehnenmäßig an der Komponente, wie es erforderlich ist, um das derzeitige profilsehnenmäßige Innen- und Außen-Moment der Komponente in Übereinstimmung zu bringen mit dem profilsehnenmäßigen Ziel-Innen- und Ziel-Außen-Moment der Komponente;
Bestimmen des derzeitigen spannweitenmäßigen Vorderkanten- und Hinterkanten-Moments der Komponente, die sich aus den eingestellten profilsehnenmäßigen Ziel-Momenten der Komponente ergeben; und
Hinzufügen oder Wegnehmen von Innen- oder Außengewicht spannweitenmäßig an der Komponente, wie es erforderlich ist, um die derzeitigen spannweitenmäßigen Komponentenmomente in Übereinstimmung zu bringen mit spannweitenmäßigen Ziel-Vorderkanten- und Ziel-Hinterkanten-Momenten.

## Revendications

1. Un ensemble d'équilibrage statique conçu pour déterminer les moments réels interne et externe selon la corde d'une pale de rotor d'hélicoptère (2) ayant un axe d'attaque de pale (36), ledit ensemble d'équilibrage statique étant caractérisé par :
un premier plateau de pesée (8IBLE, 9IBLE) positionné à proximité de l'angle de bord d'attaque interne (30) de la pale de rotor (2);
un deuxième plateau de pesée (8IBTE, 9IBTE) positionné à proximité d'un angle de bord de fuite interne (20) de la pale de rotor (2);
un troisième plateau de pesée (8OBLE, 9OBLE) positionné à proximité d'un angle de bord d'attaque externe (30) de la pale de rotor (2);
un quatrième plateau de pesée (8OBTE, 9OBTE) positionné à proximité d'un angle de bord de fuite externe (20) de la pale de rotor (2);
lesdits premier et deuxième plateaux de pesée (8IBLE, 9IBLE, 8IBTE, 9IBTE) formant un moyen interne selon la corde pour fournir des valeurs de poids internes (WIBLE, WIBTE) pour déterminer le moment selon la corde interne réel (IBMseloncorde) de la pale de rotor (2);
lesdits troisième et quatrième plateaux de pesée (8OBLE, 9OBLE, 8OBTE, 9OBTE) formant un moyen externe selon la corde pour fournir des valeurs de poids externes (WOBLE, WOBTE) pour déterminer le moment selon la corde externe réel (OBMseloncorde) de la pale de rotor (2); et
un microprocesseur (MPR), connecté auxdits moyens selon la corde interne et externe (8IBLE, 9IBLE; 8IBTE, 9IBTE; 8OBLE, 9OBLE; 8OBTE, 9OBTE) et fonctionnant pour utiliser lesdites valeurs de poids interne et externe (WIBLE, WIBTE; WOBLE, WOBTE), afin de déterminer les moments selon la corde interne et externe réels (IBMseloncorde; OBMseloncorde) de la pale de rotor (2).

2. L'ensemble d'équilibrage statique selon la revendication 1, caractérisé en ce que
ledit premier plateau de pesée (8IBLE, 9IBLE) est décalé d'une distance C1 vis-à-vis de l'axe d'attaque de pale (36), en direction du bord d'attaque (30) de la pale de rotor (2):
ledit deuxième plateau de pesée (8IBTE, 9IBTE) est décalé d'une distance C2 vis-à-vis de l'axe (36) en direction du bord de fuite (20) de la pale de rotor (2);
ledit troisième plateau de pesée (8OBLE, 9OBLE) est décalé d'une distance C3 vis-à-vis de l'axe d'attaque de pale (36) en direction du bord d'attaque (30) de la pale de rotor (2);
ledit quatrième plateau de pesée (8OBTE, 9OBTE) est décalé d'une distance C4 vis-à-vis de l'axe d'attaque de pale (36) en direction du bord de fuite (20) de la pale de rotor (2);
et dans lequel ledit microprocesseur (MPR) est programmé pour déterminer les moments selon la corde interne et externe instantanés (IBMseloncorde; OBMseloncorde) en résolvant les équations :$\begin{matrix}\begin{matrix}\begin{matrix}\text{IBMseloncorde = WIBLE x C1 - WIBTE x C2}\end{matrix} \\ \begin{matrix}\text{OBMseloncorde = WOBLE x C2 - WOBTE x C4}\end{matrix}\end{matrix}\end{matrix}$ dans lesquelles
WIBLE est le poids enregistré par ledit premier plateau de pesée (8IBLE, 9IBLE);
WIBTE est le poids enregistré par ledit deuxième plateau de pesée (8IBTE, 9IBTE)
WOBLE est le poids enregistré par ledit troisième plateau de pesée (8OBLE, 9OBLE); et
WOBTE est le poids enregistré par ledit quatrième plateau de pesée (8OBTE, 9OBTE).

3. L'ensemble d'équilibrage statique selon la revendication 1 ou 2, caractérisé en ce que ledit microprocesseur (MPR) est programmé pour calculer des corrections de poids interne et externe (WPIB, WPOB) de la pales de rotor (2) nécessaires pour arriver à un moment selon la corde interne de consigne (MCIB) et un moment selon la corde externe de consigne (MCOB) pour la pale de rotor (2), et dans lequel lesdits moments selon la corde interne et externe de consigne (MCIB, MCOB) sont conçus pour obtenir un équilibrage aérodynamique selon la corde pour la pale de rotor (2).

4. L'ensemble d'équilibrage statique de la revendication 3, caractérisé en ce que ledit microprocesseur (MPR) est programmé pour calculer lesdites corrections de poids interne et externe (WPIB, WPOB) par résolution des équations :$\begin{matrix}\begin{matrix}\begin{matrix}\text{WPIB = WIBLE x C1 - WIBTE x C2 ± MCIB}\end{matrix} \\ \begin{matrix}\text{WPOB = WOBLE x C3 - WOBTE x C4 ± MCOB}\end{matrix}\end{matrix}\end{matrix}$ dans lesquelles
MCIB est ledit moment selon la corde interne de consigne;
WPIB est ladite correction de poids interne nécessaire pour atteindre MCIB;
MCOB est ledit moment selon corde externe de consigne; et
WPOB est ladite correction de poids externe nécessaire pour atteindre MCOB.

5. L'ensemble d'équilibrage statique selon l'une quelconque des revendications 1 à 4, caractérisé en ce que
lesdits premier et troisième plateaux de pesée (8IBLE, 9IBLE; 8OBLE, 9OBLE) constituent des moyens de bord d'attaque pour fournir lesdites valeurs de poids de bord d'attaque (WIBLE, WOBLE) afin de déterminer un moment dans le sens de l'envergure de bord d'attaque réel de la pale de rotor (2);
lesdits deuxième et quatrième plateaux de pesée (8IBTE, 9IBTE; 8OBTE, 9OBTE) constituent des moyens de bord de fuite pour fournir lesdites valeurs de poids de bord de fuite (WIBTE, WOBTE) afin de déterminer un moment dans le sens de l'envergure de bord de fuite réel de la pale de rotor (2); et
ledit microprocesseur (MPR) est connecté auxdits moyens de bord d'attaque et de fuite (8IBLE, 9IBLE, 8OBLE; 9OBLE, 8IBTE, 9IBTE; 8OBTE, 9OBTE) et fonctionne pour utiliser lesdites valeurs de poids de bord d'attaque et de fuite (WIBLE, WOBLE; WIBTE; WOBTE) afin de déterminer lesdits moments de pale de rotor dans le sens de l'envergure, réels, sur bord d'attaque et bord de fuite.

6. L'ensemble d'équilibrage statique selon la revendication 5, caractérisé en ce que
lesdits premier et deuxième plateaux de pesée (8IBLE, 9IBLE; 8IBTE, 9IBTE) sont espacés vis-à-vis d'une ligne de référence (38) désignant l'axe de rotation de la pale de rotor (2), d'une distance r1;
lesdits troisième et quatrième plateaux de pesée (8OBLE, 9OBLE; 8OBTE, 9OBTE) sont espacés vis-à-vis de ladite ligne de référence (38) d'une distance r2; et dans lequel
ledit microprocesseur (MPR) détermine lesdits moments de pale de rotor dans le sens de l'envergure, réels, sur bord d'attaque et bord de fuite, en résolvant l'équation :$\text{Menvergure = (WIBLE+WIBTE±WPIB)xr1 + (WOBLE+WOBTE±WPOB)xr2}$ dans laquelle
Menvergure est le moment dans le sens de l'envergure réel de la pale de rotor (2).

7. L'ensemble d'équilibrage statique selon la revendication 5 ou 6, caractérisé en ce que ledit microprocesseur (MPR) est programmé pour calculer des corrections de poids dans le sens de l'envergure interne et externe, pour la pale de rotor (2), corrections nécessaires pour obtenir un moment de consigne dans le sens de l'envergure pour la pale de rotor (2), ledit moment de consigne dans le sens de l'envergure étant désigné pour obtenir l'équilibrage dynamique dans le sens de l'envergure de la pale rotor (2).

8. L'ensemble d'équilibrage statique selon la revendication 7, caractérisé en ce que ledit microprocesseur (MPR) est programmé pour calculer lesdites corrections de poids dans le sens de l'envergure en résolvant l'équation :${\text{Menvergure(nécessaire) = Menvergure ± W36 x r}}_{\text{s}}$ dans laquelle
Menvergure(nécessaire) est le moment final, nécessaire dans le sens de l'envergure, de la pale (2),
W36 est le poids à ajouter ou à enlever au niveau de l'axe d'attaque, et
rₛ est la distance, dans le sens de l'envergure, de W36 vis-à-vis de ladite ligne de référence (38).

9. L'ensemble d'équilibrage statique selon l'une quelconque des revendications 1 à 8, caractérisé par
des organes supports internes (14), conçus pour supporter une partie interne de la pale de rotor (2) sur lesdits premier et deuxième plateaux de pesée (8IBLE, 9IBLE, 8IBTE, 9IBTE); et
des organes support externes (14) conçus pour supporter une partie externe de la pale de rotor (2) sur lesdits troisième et quatrième plateaux de pesée (8OBLE, 9OBLE; 8OBTE, 9OBTE);
lesdits organes support interne et externe (14) ayant des surfaces supérieures (16) profilées se conformant aux surfaces (18) respectives supportées de la pale de rotor (2).

10. L'ensemble d'équilibrage statique selon la revendication 9, caractérisé par des tiges de positionnement (24), destinées à fixer de façon temporaire la pale de rotor (2) en combinaison alignée avec lesdits organes supports interne et externe (14).

11. L'ensemble d'équilibrage selon la revendication 9 ou 10, caractérisé par des moyens de levage (10), conçus pour maintenir lesdits organes support interne et externe (14), lesdits moyens de levage (10) agissant pour abaisser et lever sélectivement lesdits organes support interne et externe (14) respectifs par rapport auxdits plateaux de pesée (8IBLE, 9IBLE; 8IBTE, 9IBTE; 8OBLE, 9OBLE; 8OBTE, 9OBTE) correspondants.

12. Un procédé d'ajustement statique de la distribution du poids d'une pale de rotor d'hélicoptère (2), conçu pour fournir un équilibrage opérationnel dans le sens de la corde et dans le sens de l'envergure de la pale de rotor (2), comprenant les étapes constituant à :
déterminer les moments réels selon la corde interne et externe (IBMseloncorde; OBMseloncorde) de la pale de rotor (2);
ajouter ou soustraire le poids interne et externe selon la corde sur la pale de rotor (2), comme requis, pour que lesdits moments réels interne et externe selon la corde (IBMseloncorde; OBMseloncorde) de la pale (2) soient adaptés à des moments de consigne interne et externe selon la corde (MCIB, MCOB) de la pale (2);
déterminer des moments réels de pale dans le sens de l'envergure, en bord d'attaque et en bord de fuite, résultant des moments de pale selon la corde de consigne (MCIB, MCOB) issus de la conformation de la pale (2); et
ajouter ou soustraire le poids interne et externe dans le sens de l'envergure sur la pale de rotor (2),comme requis, pour conformer les moments de pale dans le sens de l'envergure réels aux moments de consigne de bord d'attaque et de bord de fuite dans le sens de l'envergure.

13. Un ensemble d'équilibrage statique conçu pour déterminer statiquement les moments réels interne et externe selon la corde d'un composant de pale de rotor d'hélicoptère, ledit ensemble d'équilibrage statique étant caractérisé par :
un premier plateau de pesée (8IBLE, 9IBLE) positionné à proximité de l'angle de bord d'attaque interne du composant;
un deuxième plateau de pesée (8IBTE, 9IBTE) positionné à proximité d'un angle de bord de fuite interne du composant;
un troisième plateau de pesée (8OBLE, 9OBLE) positionné à proximité d'un angle de bord d'attaque externe du composant;
un quatrième plateau de pesée (8OBTE, 9OBTE) positionné à proximité d'un angle de bord de fuite externe du composant;
lesdits premier et deuxième plateaux de pesée (8IBLE, 9IBLE; 8IBTE, 9IBTE) formant un moyen interne selon la corde pour fournir des valeurs de poids internes pour déterminer le moment selon la corde interne réel (IBMseloncorde) du composant;
lesdits troisième et quatrième plateaux de pesée (8OBLE, 9OBLE; 8OBTE, 9OBTE) formant un moyen externe selon la corde pour fournir des valeurs de poids externe pour déterminer le moment selon la corde externe réel (OBMseloncorde) du composant; et
un microprocesseur (MPR), connecté auxdits moyens selon la corde interne et externe (8IBLE, 9IBLE; 8IBTE, 9IBTE, 8OBLE, 9OBLE; 8OBTE, 9OBTE) et fonctionnant pour utiliser lesdites valeurs de poids interne et externe, afin de déterminer les moments selon la corde interne et externe réels du composant.

14. Un procédé d'ajustement statique de la distribution du poids d'un composant de pale de rotor d'hélicoptère, conçu pour fournir un équilibrage opérationnel dans le sens de la corde et dans le sens de l'envergure, du composant, comprenant les étapes constituant à :
déterminer les moments réels selon la corde interne et externe du composant;
ajouter ou soustraire le poids interne et externe selon la corde sur le composant, comme requis, pour que lesdits moments réels interne et externe selon la corde du composant soient adaptés à des moments de consigne interne et externe selon la corde du composant;
déterminer des moments réels de pale dans le sens de l'envergure, en bord d'attaque et en bord de fuite résultant des moments de consigne issus de la conformation du composant; et
ajouter ou soustraire le poids interne et externe dans le sens de l'envergure sur le composant, comme requis, pour conformer les moments réels dans le sens de l'envergure, au moment de consigne de bord d'attaque et de bord de fuite dans le sens de l'envergure du composant.
